# EUROPÄISCHE PATENTANMELDUNG

(11) **EP 3 098 364 A1**
(43) Veröffentlichungstag der Anmeldung: **30.11.2016**
(21) Anmeldenummer: 15169381.9
(22) Anmeldetag: 27.05.2015
(51) Int. Cl.: E04D 5/14, E04D 3/36

(54) **PROFILSYSTEM ZUR FIXIERUNG VON ABDECKUNGEN, INSBESONDERE DACHDICHTUNGSBAHNEN**

(71) Anmelder: Sika Technology AG, 6340 Baar (CH)
(72) Erfinder: Stulier, Roland, 76829 Landau (DE); Buff, Robert, 8590 Romanshorn (CH); Näf, Armin, 6023 Rothenburg (CH); Weiss, Felix, 9225 Wilen/Gottshaus (CH)
(74) Vertreter: Sika Patent Attorneys

(57) **Zusammenfassung**

Die Erfindung betrifft ein Profilsystem zur Fixierung von Abdeckungen, insbesondere Dachdichtungsbahnen (43), umfassend mindestens ein erstes Befestigungsprofil (11), mindestens ein zweites Befestigungsprofil (12), wobei das erste (11) und das zweite (12) Befestigungsprofil jeweils einen Befestigungsflansch (21), einen ersten Endabschnitt (13) und einen zweiten Endabschnitt (14) aufweisen, sowie mindestens einen Verbindungsclip (10) zur rastenden Aufnahme sowohl des ersten Endabschnitts (13) des ersten Befestigungsprofils (11) als auch zur rastenden Aufnahme des zweiten Endabschnitts (14) des zweiten Befestigungsprofils (12) derart, dass das erste (11) und das zweite (12) Befestigungsprofil ein gemeinsames Verbundprofil ausbilden.

## Beschreibung

### Technisches Gebiet

Die Erfindung betrifft ein Profilsystem zur Fixierung von Abdeckungen, insbesondere Dachdichtungsbahnen, ein Dachabdichtungssystem sowie ein Verfahren zur Fixierung von Abdeckungen, insbesondere Dachdichtungsbahnen unter Verwendung eines Profilsystems.

### Stand der Technik

Im Stand der Technik sind Stahlschienen (Profile) für die mechanische Befestigung von Flachdachabdichtungen bekannt. Derartige Profile weisen üblicherweise eine (vergleichsweise große) Länge von 4-5 m auf, um den Montageaufwand auf der Baustelle zu reduzieren. Wenn mehrere Profile axial hintereinander angeordnet werden müssen, werden üblicherweise sogenannte "Stoßläppchen" eingesetzt, um zu verhindern, dass Endkanten der Profile eine Überdeckung der Profile beschädigen.

Einerseits kann also mit möglichst langen Profilen der Montageaufwand auf der Baustelle reduziert werden. Andererseits hat sich gezeigt, dass vergleichsweise lange Profile mit einem hohen Kostenaufwand für die Logistik verbunden sind. Dabei ist festzustellen, dass oftmals Längen von über 2,40 m als Langgut gelten. Diese Langgüter können nicht mehr standardmäßig verladen werden und werden deshalb oftmals als "Direktladungen" zugestellt. Dies bedeutet für den Spediteur, dass er nur schwer kombinierbare Ladungen zu transportieren hat und der Laderaum daher nicht voll ausgenutzt werden kann. Weiterhin ist das Risiko bei vergleichsweise langen Profilen relativ groß, dass diese während des Transports beschädigt werden (beispielsweise verbogen werden).

Vor diesem Hintergrund liegt der Erfindung die Aufgabe zu Grunde, ein Profilsystem vorzuschlagen, das möglichst einfach transportiert werden kann und dennoch für den Monteur mit einem möglichst geringen Mehraufwand bei der Montage verbunden ist. Weiterhin soll ein entsprechendes Dachabdichtungssystem vorgeschlagen werden sowie ein entsprechendes Verfahren zur Fixierung von Abdeckungen, insbesondere Dachdichtungsbahnen.

### Offenbarung der Erfindung

Diese Aufgabe wird insbesondere durch ein Profilsystem nach Anspruch 1, eine Verwendung eines Profilsystems nach Anspruch 13, eine Verwendung eines Verbindungsclips nach Anspruch 14, ein Dachabdichtungssystem nach Anspruch 15 sowie ein Verfahren zur Fixierung von Abdeckungen nach Anspruch 16 gelöst.

Insbesondere wird die Aufgabe durch ein Profilsystem zur Fixierung von Abdeckungen, insbesondere Dachdichtungsbahnen gelöst, umfassend mindestens ein erstes Befestigungsprofil, mindestens ein zweites Befestigungsprofil, wobei das erste und das zweite Befestigungsprofil jeweils einen Befestigungsflansch, einen ersten Endabschnitt und einen zweiten Endabschnitt aufweisen, sowie mindestens einen Verbindungclip zur rastenden Aufnahme sowohl des ersten Endabschnitts des ersten Befestigungsprofils als auch zur rastenden Aufnahme des zweiten Endabschnitts des zweiten Befestigungsprofils derart, dass das erste und das zweite Befestigungsprofil ein gemeinsames Verbundprofil ausbilden.

Ein Kerngedanke der Erfindung liegt darin, einen Verbindungsclip vorzusehen, in dem die Befestigungsprofile (rastend) aufgenommen werden können. Dadurch können vergleichsweise kurze Befestigungsprofile zum Einsatz kommen, die (auf der Baustelle) schnell und unkompliziert durch den Verbindungsclip miteinander verbunden werden können, so dass kaum Mehraufwand anfällt.

Insgesamt können beträchtliche Kosten eingespart werden (vor allem während des Transports). Es ist möglich, nur eine Schienenlänge (Profillänge) im Sortiment zu halten. Weiterhin sind kaum Reklamationen durch "zu kurze" Schienen zu erwarten. Der Verbindungsclip dient zumindest abschnittsweise auch als Schutzelement und kann auch als Abstandhalter dienen. Beispielsweise kann der Verbindungsclip als Kantenschutz dienen. Weiterhin ist aufgrund des Verbindungsclips kein aufwändiges Zuschneiden und Aufschweißen von "Stoßläppchen" mehr nötig. Der Verbindungsclip kann auch gleichzeitig eine Montage in geneigten Bauteilen (Wand, Lichtbänder etc.) erleichtern. Der Verbindungsclip erleichtert die Montage der Befestigungsprofile, da die Ausrichtung dieser schnell und einfach erfolgen kann. Insgesamt werden also nicht nur Kosten reduziert (vor allem beim Transport), sondern auch die Verlegung bzw. Verarbeitung des Profilsystems ist verbessert (vereinfacht). Die Verbindung der Profilsysteme kann schnell und einfach durch das Einrasten (Einklicken) im Verbindungsclip erfolgen. Das Ausrichten und die Montage der Befestigungsprofile kann schnell und einfach von nur einer Person ausgeführt werden.

Ein zentraler Gedanke der Erfindung ist der Verbindungsclip, der auch als solcher Gegenstand der Erfindung ist (ohne dass zwingend ein System mit entsprechenden Befestigungsprofilen vorliegen muss). Bevorzugte Ausgestaltungen des Verbindungsclips lassen sich dem Folgenden entnehmen.

Die Aufgabe wird weiterhin gelöst durch die Verwendung des Profilsystems zur Fixierung von Abdeckungen, insbesondere der Dachdichtungsbahnen.

Weiterhin wird die Aufgabe gelöst durch die Verwendung eines Verbindungsclips zur rastenden Aufnahme sowohl eines ersten Endabschnitts eines ersten Befestigungsprofils als auch zur rastenden Aufnahme eines zweiten Endabschnitts eines zweiten Befestigungsprofils derart, dass das erste und das zweite Befestigungsprofil ein gemeinsames Verbundprofil zur Fixierung von Abdeckungen, insbesondere Dachdichtungsbahnen ausbilden.

Die obige Aufgabe wird weiterhin durch ein Dachabdichtungssystem, umfassend das Profilsystem sowie eine Unterkonstruktion und/oder eine Dampf- und/oder Luftsperrbahn und/oder eine Wärmedämmschicht und/oder eine Abdichtungsbahn und/oder eine, insbesondere abdichtende, Profilüberdeckung, gelöst.

Weiterhin wird die Aufgabe durch ein Verfahren zur Fixierung von Abdeckungen, insbesondere Dachdichtungsbahnen unter Verwendung des Profilsystems gelöst, wobei mindestens ein Endabschnitt in den Verbindungsclip eingeschnappt und/oder eingesteckt wird. Vorzugsweise wird zunächst eine Schnappverbindung mit anschließender Steckverbindung durchgeführt.

Unter einer "rastenden Aufnahme" ist insbesondere eine formschlüssige Verbindung zu verstehen, die zwischen dem Verbindungsclip und dem zugehörigen Endabschnitt des entsprechenden Befestigungsprofils ausgebildet werden kann. Diese Verbindung erfolgt vorzugsweise in Form einer Klick-Verbindung, also insbesondere einer Verbindung, bei der eine Verbindungsstruktur elastisch verformt wird (während des Verbindens) und aufgrund einer elastischen Rückstellkraft die zu verbindenden Elemente arretiert (rastend hält). Die Befestigungsprofile dienen der Fixierung von Abdeckungen, insbesondere Dachdichtungsbahnen. Unter einem "Endabschnitt" ist vorzugsweise ein Abschnitt des entsprechenden Befestigungsprofils zu verstehen, der sich von einer Endkante (Stirnkante) des Profils bis zu 10% in Richtung der anderen Endkante (Stirnkante) erstreckt. Ein "Verbundprofil" ist ein Profil, das mindestens zwei (ggf. auch drei, vier oder mehr) Befestigungsprofile umfasst, die voneinander strukturell abgegrenzt sind (und über einen Verbindungsclip verbunden sein können).

Das erste und/oder zweite Befestigungsprofil kann (zumindest abschnittsweise) aus Metall (insbesondere aus Stahl) gefertigt sein. Besonders bevorzugt ist hierbei (schmelztauch-)veredelter Stahl. Alternativ ist auch die Ausbildung aus einem anderen Metall bzw. einer anderen Metalllegierung, wie beispielsweise Aluminium (Aluminiumlegierung). Auch eine Ausbildung aus einem Kunststoff ist denkbar. Durch eine Ausbildung aus Metall (oder einem vergleichsweise formstabilen und widerstandskräftigen Kunststoff) kann die Abdeckung besonders sicher fixiert werden.

Der Befestigungsclip kann (zumindest abschnittsweise) aus Kunststoff, insbesondere als Spritzguss (-Teil) gefertigt sein. Besonders bevorzugt ist eine Ausbildung auf Basis von Polyamid. Dabei kann ein Anteil von Polyamid mindestens 30%, vorzugsweise mindestens 70% betragen. Alternativ ist es auch möglich, den Befestigungsclip aus Metall (Metalllegierung) auszubilden. Eine Fertigung aus Kunststoff ist in herstellungstechnischer Sicht vergleichsweise einfach, weiterhin kann auf einfache Art und Weise eine rastende Verbindung hergestellt werden.

Das erste und/oder zweite Befestigungsprofil kann als U-Profil ausgebildet sein. Neben dem Befestigungsflansch können zwei Stegbereiche vorgesehen sein. Die Stegbereiche sind vorzugsweise zumindest abschnittsweise gefaltet und/oder geknickt. Zwischen dem Befestigungsflansch und mindestens einem Stegbereich kann ein nach außen gerichteter Eckvorsprung ausgebildet sein. Mindestens ein Stegbereich kann (zumindest abschnittsweise) nach innen gekrümmt sein. Eine Quererstreckung des Befestigungsflansches kann mindestens 1,5-mal, vorzugsweise mindestens 2,0-mal, weiter vorzugsweise mindestens 2,5-mal so groß sein wie eine Erstreckung der Stegbereiche in eine Richtung, die senkrecht auf einer durch den Befestigungsflansch definierten Ebene steht. Es handelt sich also vorzugsweise bei dem U-Profil um ein vergleichsweise flaches U-Profil, so dass die Fixierung der Abdeckung besonders effektiv ermöglicht wird und es gleichzeitig vereinfacht wird, das Profil durch eine abdichtende Überdeckung abzudichten. Faltungen und/oder Knicke im Stegbereich können dabei auf synergistische Art und Weise mit dem Verbindungsclip zusammenwirken, so dass eine sichere rastende Verbindung zwischen dem jeweiligen Befestigungsprofil und Verbindungsclip (bzw. zwischen den aneinandergrenzenden Befestigungsprofilen) ermöglicht ist. Wenn ein Eckvorsprung vorgesehen ist, ist der Befestigungsflansch beim Auflegen des Befestigungsprofils gegenüber dem Untergrund leicht erhöht. Bei einer alternativen Ausbildung kann nur der Eckvorsprung (bzw. beide Eckvorsprünge) in Kontakt mit dem Untergrund sein. Auch dadurch wird die Fixierung der Abdeckung (Dachdichtungsbahn) verbessert.

Die jeweiligen Endabschnitte und der Befestigungsclip sind vorzugsweise derart korrespondierend zueinander ausgebildet, dass eine Schnappverbindung hergestellt werden kann. Alternativ oder zusätzlich kann auch eine Steckverbindung ermöglicht sein. Besonders bevorzugt ist eine kombinierte Schnapp-Steck-Verbindung, insbesondere derart, dass der jeweilige Endabschnitt zunächst mit dem Verbindungsclip eine Schnappverbindung eingeht und dann in seine endgültige Montageposition durch Stecken (z.B. Bewegung in axialer Richtung) überführt wird. Im Allgemeinen sind zur Verbindung von Verbindungsclip und zugehörigen Endabschnitten keine weiteren Verbindungselemente notwendig (bzw. vorgesehen). Derartige Verbindungselemente können ggf. zusätzlich vorliegen.

Verbindungsclip und/oder erstes und/oder zweites Befestigungsprofil sind (jeweils) vorzugsweise einstückig (monolithisch), ggf. aus einem homogenen Material, gefertigt.

Das erste und/oder zweite Befestigungsprofil kann mindestens eine Aussparung (Loch) aufweisen. Eine derartige Aussparung hat vorzugsweise den Zweck, entsprechende Befestigungsschrauben aufzunehmen, um das Befestigungsprofil an dem Untergrund zu fixieren. Vorzugsweise liegt eine Vielzahl derartiger Aussparungen (Löcher) vor, beispielsweise mindestens drei oder mindestens fünf Aussparungen, die ggf. in einem regelmäßigen Abstand zueinander (beispielsweise in axialer Richtung) angeordnet sein können. Auch der Verbindungsclip kann eine oder mehrere Aussparungen (Löcher) aufweisen.

Über derartige Aussparungen (Löcher) kann entweder eine Fixierung des Verbindungsclips an dem Untergrund oder eine zusätzliche Fixierung mit den zugeordneten Befestigungsprofilen erfolgen. Insgesamt wird damit der Montageaufwand deutlich reduziert.

Der Befestigungsclip kann einen U-förmigen Querschnitt aufweisen. Eine derartige Ausgestaltung erlaubt auf konstruktiv einfache Art und Weise eine rastende Aufnahme der zugeordneten Endabschnitte der Befestigungsprofile.

In einer konkreten Ausführungsform weist der Befestigungsclip einen Anschlag auf, an dem mindestens eine Stirnkante eines zugeordneten Endabschnittes angelegt werden kann. Dadurch wird eine klar definierte Positionierung des Endabschnittes an (in) dem Verbindungsclip ermöglicht, was den Montageaufwand reduziert. Das Anschlagselement kann vorzugsweise so ausgebildet und angeordnet sein, dass die Stirnkanten beider zugeordneter Befestigungsprofile an voneinander weg gerichteten Flächen des Anschlagelements angelegt werden können (insbesondere derart, dass das Anschlagselement als Abstandshalter fungiert).

In einer bevorzugten Ausführungsform ist der Verbindungsclip (zumindest im Wesentlichen) plattenförmig ausgebildet. Alternativ oder zusätzlich kann der Verbindungsclip an Längsrändern Aufnahmen (beispielsweise rinnenförmige Aufnahmen) zumindest von Abschnitten der Befestigungsprofile (insbesondere von deren Stegbereichen) aufweisen. In einer konkreten Ausführungsform ist ein Bereich zwischen den Aufnahmen der Längsränder (vollständig) plan. Insgesamt lässt sich ein derartiger Verbindungsclip einfach herstellen und ist dennoch vergleichsweise zuverlässig.

In einer alternativen Ausführungsform weist der Verbindungsclip mindestens einen Ringabschnitt auf. In diesen Ringabschnitt kann mindestens einer der korrespondierenden Endabschnitte der Befestigungsprofile einsteckbar sein. Durch einen derartigen Ringabschnitt werden zumindest Abschnitte der Befestigungsprofile vollständig durch den Verbindungsclip umschlossen, was das Risiko reduziert, dass die Befestigungsprofile die Dachdichtungsbahn (Abdeckung) beschädigen.

Der Verbindungsclip kann derart ausgestaltet sein, dass er (im montierten Zustand) zumindest Abschnitte einer Oberseite mindestens eines Befestigungsprofils, insbesondere zumindest Abschnitte einer Innenfläche des Befestigungsflansches überdeckt. Alternativ oder zusätzlich kann der Verbindungsclip so ausgebildet sein, dass er (im montierten Zustand) zumindest Abschnitte der Stegbereiche überdeckt. Alternativ oder zusätzlich kann der Verbindungsclip so ausgebildet sein, dass er zumindest Abschnitte einer Unterseite mindestens eines Befestigungsprofils, insbesondere eine Außenfläche des Befestigungsflansches überdeckt. Besonders bevorzugt überdeckt der Verbindungsclip zumindest teilweise Endkanten (Stirnkanten) der Befestigungsprofile, so dass das Risiko von Beschädigungen (oder Verletzungen) durch diese Endkanten reduziert wird.

Die Befestigungsprofile können kürzer als 3,5 m, vorzugsweise kürzer als 2,5 m sein. Weiterhin sind die Befestigungsprofile vorzugsweise länger als 1,0 m, weiter vorzugsweise länger als 1,5 m.

In einer konkreten Ausführungsform ist ein Endclip zur rastenden Aufnahme des zweiten Endabschnitts des ersten Profilelements vorgesehen. Weitere Endclips (insbesondere zur Aufnahme des ersten Endabschnitts des zweiten Profilelements) können ebenfalls vorgesehen sein. Ein derartiger Endclip ist vorzugsweise in Form einer "Kappe" ausgebildet, die auf den jeweiligen Endabschnitt aufgeclipst werden kann. Ein Aufstecken ist ebenfalls möglich (alternativ oder zusätzlich). Durch einen derartigen Endclip kann weiter das Risiko von Schäden oder Verletzungen reduziert werden.

Eine Fläche des Verbindungsclips, die mit dem zugeordneten Befestigungsprofil in Berührung kommt, kann mindestens einen Vorsprung (beispielsweise eine oder mindestens zwei Rippen) aufweisen. Wenn das Befestigungsprofil in Kontakt mit dem Verbindungsclip kommt, können diese Vorsprünge (leicht) nachgeben. Dadurch können auf einfache Art und Weise Fertigungstoleranzen ausgeglichen werden.

### Beschreibung der Zeichnungen

Vorteile und Zweckmäßigkeit der Erfindung werden aus der nachfolgenden Beschreibung bevorzugter Ausführungsbeispiele anhand der Figuren deutlich. Von diesen zeigen:
- Figur 1: eine schematische Schrägansicht einer ersten Ausführungsform des Profilsystems;
- Figur 2: eine Frontansicht eines Befestigungsprofils des Profilsystems gemäß Figur 1;
- Figur 3: eine zweite Schrägansicht des Profilsystems gemäß Figur 1;
- Figur 4: einen Verbindungsclip des Befestigungssystems gemäß Figur 1 in Schrägansicht;
- Figur 5: eine schematische Schrägansicht einer zweiten Ausführungsform eines Profilsystems;
- Figur 6: eine Schrägansicht des Verbindungsclips gemäß der Ausführungsform nach Figur 5 in einer ersten Schrägansicht;
- Figur 7: den Verbindungsclip gemäß Figur 6 in einer zweiten Schrägansicht;
- Figur 8: den Verbindungsclip gemäß Figuren 6 und 7 in einer Ansicht von oben;
- Figur 9: den Verbindungsclip entlang der Linie IX-IX geschnitten;
- Figur 10: den Verbindungsclip gemäß Figur 8 in einer Ansicht von vorne;
- Figur 11: den Verbindungsclip gemäß Figur 10 einschließlich darin aufgenommenem Befestigungsprofil in einer Ansicht von vorne;
- Figur 12: ein Deckenaufbau in einer schematischen Darstellung.

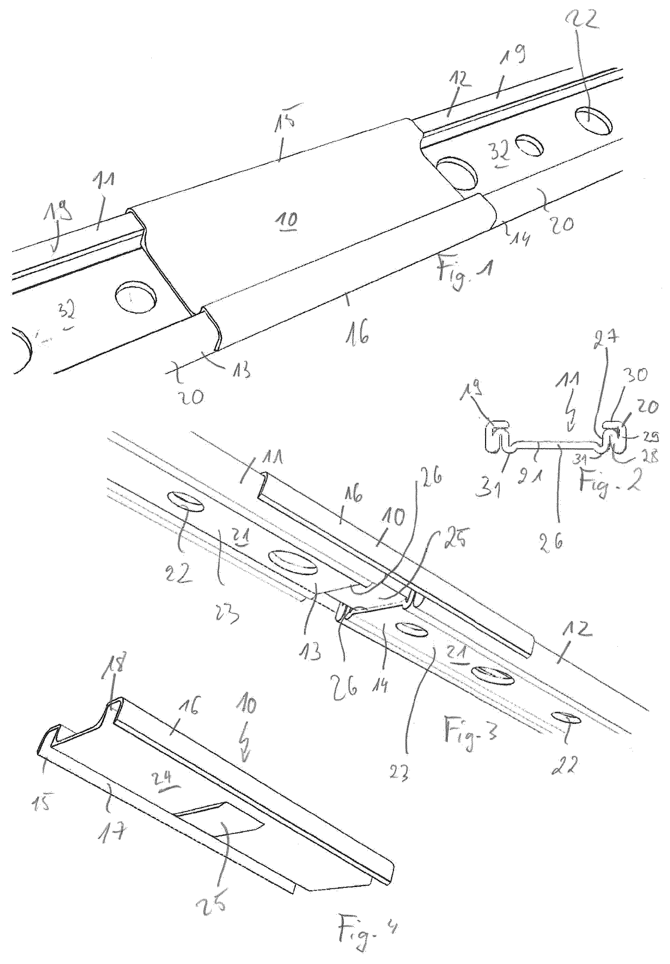

Figur 1 zeigt eine erste Ausführungsform des Profilsystems in einer Schrägansicht von oben. Figur 3 zeigt das Profilsystem gemäß Figur 1 in einer Schrägansicht von unten. Ein Verbindungsclip 10 ist (ohne die in Figuren 1 und 3 gezeigten Befestigungsprofile 11 und 12) in Figur 4 in einer Schrägansicht von unten gezeigt. Beispielhaft für die Befestigungsprofile 11, 12 ist das Befestigungsprofil 11 in Figur 2 in einer Ansicht von vorne dargestellt. Die Befestigungsprofile 11, 12 weisen jeweils einen ersten und einen zweiten Endabschnitt auf. In Figur 1 und 3 ist der erste Endabschnitt 13 des ersten Befestigungsprofils 11 zu sehen, weiterhin ist der zweite Endabschnitt 14 des Befestigungsabschnitts 12 zu sehen. Die Befestigungsprofile 11, 12 und der Verbindungsclip 10 bilden ein Verbundprofil aus (wie in Figuren 1 und 3 erkennbar).

Dazu ist der Verbindungsclip 10 auf die Befestigungsprofile 11, 12 bzw. deren Endabschnitte 13, 14 aufgeclipst. Weiterhin weist der Verbindungsclip 10 an seinen Längsrändern 15, 16 (rinnenförmige) Aufnahmen 17, 18 (siehe Figur 4) auf, in denen Stegbereiche 19, 20 der Befestigungsprofile 11, 12 rastend aufgenommen sind.

Insgesamt (siehe Figur 2) sind die Befestigungsprofile U-förmig ausgebildet und weisen neben den Stegbereichen 19, 20 einen Befestigungsflansch 21 auf. Dieser Befestigungsflansche (siehe Figur 1 und 3) weist Löcher 22 auf, in die Schrauben (oder andere Befestigungsmittel) eingeführt werden können, um die Befestigungsprofile (bzw. das Verbundprofil) an einem Untergrund (z.B. Dachdichtungsbahn) zu fixieren. Dabei ist die in Figur 3 gezeigte Unterseite 23 der Befestigungsprofile in Richtung Untergrund orientiert.

Zwischen den Aufnahmen 17, 18 ist der Verbindungsclip 10 (siehe Figur 4) plan (oder zumindest im Wesentlichen plan) ausgebildet, weist jedoch an seiner Unterseite 24 ein Anschlagselement (insbesondere flacher Vorsprung) 25 auf (siehe auch Figur 3), das eine Positionierung bzw. ein Anlegen von Stirnkanten 26 der Befestigungsprofile 10, 11 ermöglicht. Das Anschlagselement 25 kann in axialer Richtung vorzugsweise eine Erstreckung von mehr als 0,5 cm und/oder weniger als 2 cm, beispielsweise von 1,0 cm aufweisen.

Der Verbindungsclip 10 ist aus Polyamid (oder einem anderen Kunststoff), vorzugsweise PA6 gefertigt. Beispielsweise kann eine Fertigung im Spritzgussverfahren erfolgen. Das Material ist vorzugsweise so gewählt, dass der Verbindungsclip 10 zur rastenden Verbindung mit den Befestigungsprofilen 11, 12 eine ausreichende Elastizität aufweist.

Die Stegbereiche 19, 20 der Befestigungsprofile 11, 12 (siehe Figur 2) weisen einen ersten, vom Befestigungsflansch 21 aufragenden Abschnitt 27, einen daran anschließenden, in Richtung Befestigungsflansch 21 verlaufenden zweiten Abschnitt 28, einen vom Befestigungsflansch 21 weg verlaufenden dritten Abschnitt 29 sowie einen (in etwa) parallel zum Befestigungsflansch 21, nach innen verlaufenden vierten Abschnitt 30 auf. Insgesamt ist der Stegbereich also (mehrfach) geknickt bzw. gefaltet. Zwischen Befestigungsflansch 21 und den Stegbereichen 19, 20 verläuft jeweils ein Vorsprung 31, so dass die Befestigungsprofile beim Aufliegen auf einem Untergrund auf den Vorsprüngen 31 aufliegen (und/oder ggf. auf einem Scheitelpunkt zwischen den Abschnitten 28, 29). Durch die in Figur 2 gezeigte Struktur der Stegbereiche können diese besonders effektiv in Eingriff mit den Aufnahmen 17, 18 des Verbindungsclips 10 gebracht werden.

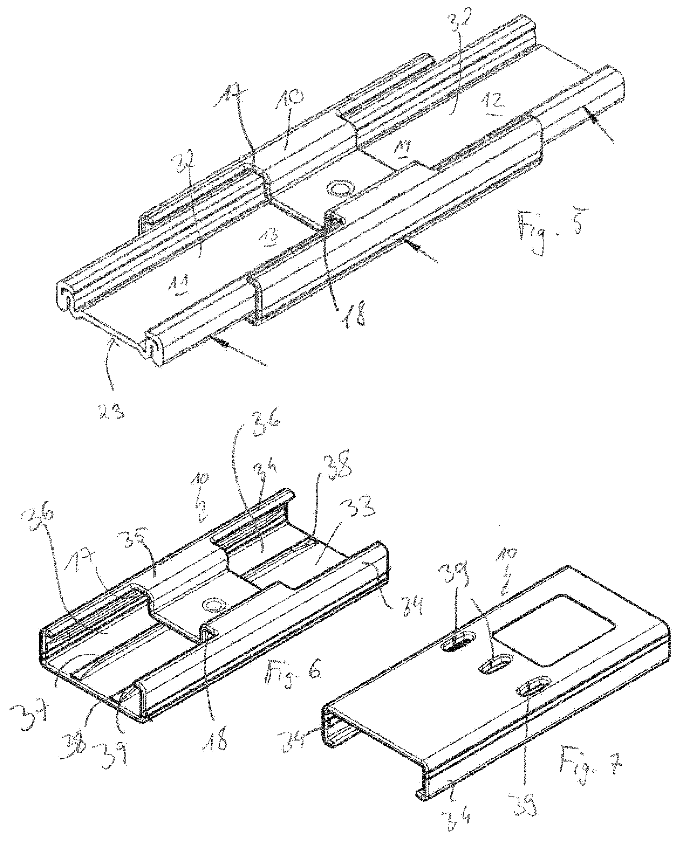

Figur 5 zeigt eine Schrägansicht einer zweiten Ausführungsform des Profilsystems. Die Befestigungsprofile 11, 12 entsprechen hier den Befestigungsprofilen der Ausführungsform nach Figur 1. Der Verbindungsclip 10 ist jedoch davon abweichend ausgebildet.

In der Ausführungsform gemäß Figur 1 überdeckt der Verbindungsclip 10 (nur) Abschnitte einer Oberseite 32 der Befestigungsprofile. In der Ausführungsform gemäß Figur 5 überdeckt der Verbindungsclip 10 neben Abschnitten der Oberseite 32 auch Abschnitte der Unterseite 23 der Befestigungsprofile 11, 12. Gemäß den Figuren 6 und 7 weist der Verbindungsclip 10 der Ausführungsform nach Fig. 5 eine Basis 33 auf, an deren Längsrändern Stege 34 verlaufen, die wiederum durch ein Brückenelement 35 (in einem zentralen Bereich) überbrückt werden, so dass sich im Bereich des Brückenelementes 35 ein geschlossener Ring ausbildet. Der Brückenbereich 35 zusammen mit den an diesen angrenzenden Abschnitten der Stege 34 kann im Querschnitt dem Verbindungsclip 10 der Ausführungsform nach Figur 1 entsprechen. Analog dem Verbindungsclip 10 weist also auch der Brückenabschnitt 35 zusammen mit den angrenzenden Stegen 34 Aufnahmen 17, 18 auf, in denen die Stegbereiche 19, 20 der Befestigungsprofile 11, 12 untergebracht werden können. Aufgrund der Basis 33 erfolgt die endgültige Positionierung der Befestigungsprofile an dem Verbindungsclip 10 gemäß Figuren 5-7 durch Hineinschieben (Einstecken) in die Aufnahmen 17, 18. Dazu wird das jeweilige Befestigungsprofil 11, 12 zunächst in Öffnungen 36, die durch die Basis 33 und die an die Basis angrenzenden Stege 34 (außerhalb des Bereichs des Brückenelementes 35) definiert werden, eingeclipst und anschließend in Richtung eines Zentrums des Brückenelementes 35 geschoben. Rippen 37 mit Anlaufschrägen 38 erlauben einen Ausgleich von Fertigungstoleranzen der Befestigungsprofile 11, 12. Konkret geben die Rippen 37 (etwas) nach, wenn ein (minimal "zu groß" dimensioniertes) Befestigungsprofil eingesteckt wird bzw. in seine Endposition gebracht wird.

Senkrecht zur Axialrichtung verlaufende Aussparungen 39 (siehe Figur 7) (die Aussparungen können auch in einer anderen Richtung verlaufen, es können auch mehr oder weniger als drei Aussparungen, beispielsweise nur eine Aussparung vorliegen) erlauben eine Fixierung des Verbindungsclips am Untergrund.

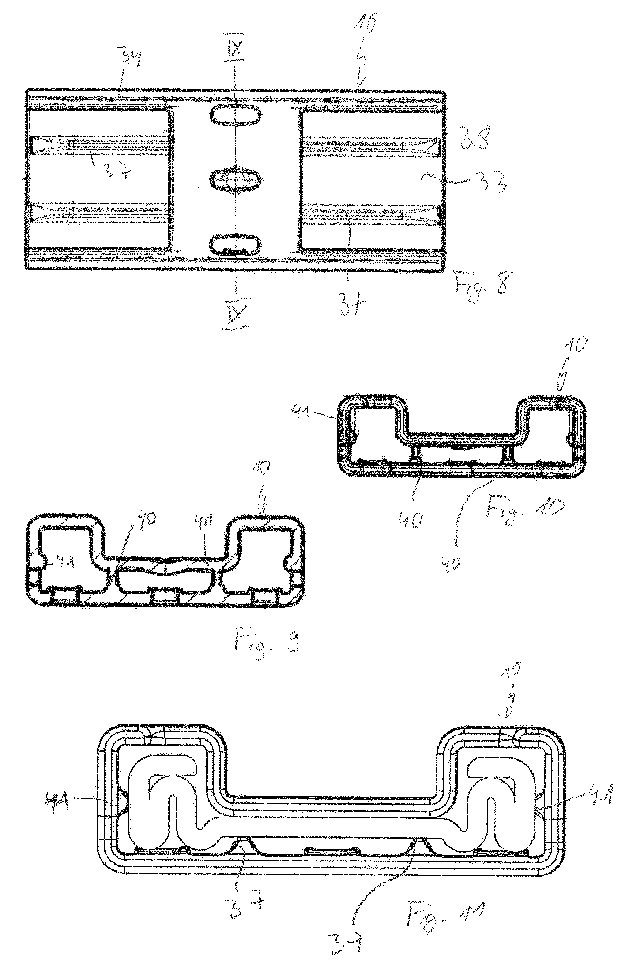

In den Figuren 8-11 sind weitere Details des Verbindungsclips 10 gemäß der Ausführungsform nach den Figuren 5-7 gezeigt. Dem Schnitt gemäß Figur 9 (entlang der Linie IX-IX in Figur 8) Anschlagselemente 40 entnehmen, die eine definierte Positionierung der Befestigungsprofile 11, 12 ermöglichen. Gleichzeitig beabstanden die Anschlagselemente 40 die aneinander angrenzenden Befestigungsprofile 11, 12 voneinander.

Weiterhin kann man den Figuren 9-11 weitere Rippen 41 entnehmen, die (wie die Rippen 37) einen Ausgleich von Fertigungstoleranzen ermöglichen.

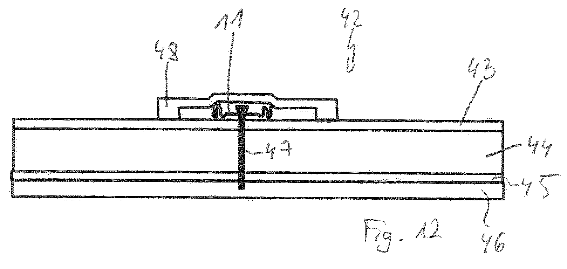

In Figur 12 ist ein Dachaufbau 42 gezeigt. Dieser Dachaufbau 42 umfasst eine Dachabdichtungsbahn 43, die auf einer Wärmedämmschicht 44 aufgebracht ist. Die Wärmedämmschicht 44 liegt wiederum oberhalb einer Dampf-/Luftsperrbahn 45. Die Bahn 45 ist auf einer Unterkonstruktion 46 (beispielsweise ein Stahltrapezprofil, eine Holzkonstruktion und/oder Stahl- oder Poren-Beton) angeordnet. Die Wärmedämmschicht 44 kann z.B. Mineralwolle und/oder Hartschaumstoff (z.B. EPS) aufweisen. Die Dachdichtungsbahn 43 ist mittels des Befestigungsprofils 11 und einer Befestigungsschraube 47 an den unter der Dachdichtungsbahn 43 angeordneten Elementen befestigt. Um auch eine Abdichtung im Bereich des Befestigungsprofils 11 sowie der Schraube 47 zu ermöglichen, ist ein (senkrecht zur Zeichenebene verlaufendes) Abdichtungsband 48 oberhalb des Befestigungsprofils 11 angeordnet.

Durch die Basis 33 in der Ausführungsform gemäß Figur 5 wird das Risiko reduziert, dass die Befestigungsprofile die darunterliegende Dachdichtungsbahn beschädigen. Andererseits ist auch festzustellen, dass in diesem Bereich (wenn Schraubverbindungen analog Figur 12 vorgesehen sind) ohnehin Verletzungen bzw. Durchbohrungen der Dachdichtungsbahn 43 vorliegen. Insofern ist die Ausführungsform gemäß Figur 1 besonders bevorzugt, da der konstruktive Aufwand für den entsprechenden Verbindungsclip 10 vergleichsweise einfach ist und auch die Montage des Verbindungsclips 10 einfach erfolgen kann. Sollte aufgrund der fehlenden Überdeckung der Unterseite 23 der Befestigungsprofile 11, 12 eine Beschädigung der Dachdichtungsbahn in diesem Bereich stattfinden, wäre dies ggf. akzeptabel, da ohnehin Durchbohrungen der Dachdichtungsbahn (aufgrund von Schrauben, die in die Löcher 22 eingebracht werden) eingebracht werden.

Die Befestigungsprofile 11, 12 weisen z.B. eine Länge von 2,25 m auf, können jedoch auch länger oder kürzer ausgebildet sein. Der Verbindungsclip 10 kann eine Länge von mehr als 5 cm aufweisen. Weiterhin kann der Verbindungsclip eine Länge von weniger als 20 cm aufweisen (vorzugsweise weniger als 15 cm). Eine Breite der Befestigungsprofile ist vorzugsweise mindestens 3 cm, weiter vorzugsweise mindestens 5 cm und/oder höchstens 10 cm, vorzugsweise höchstens 8 cm.

### Bezugszeichenliste

- 10: Verbindungsclip
- 11: erstes Befestigungsprofil
- 12: zweites Befestigungsprofil
- 13: erster Endabschnitt des ersten Befestigungsprofils
- 14: zweiter Endabschnitt des zweiten Befestigungsprofils
- 15: Längsrand
- 16: Längsrand
- 17: Aufnahme
- 18: Aufnahme
- 19: Stegbereich
- 20: Stegbereich
- 21: Befestigungsflansch
- 22: Loch
- 23: Unterseite von 11, 12
- 24: Unterseite von 10
- 25: Anschlagselement
- 26: Stirnkante
- 27: Abschnitt
- 28: Abschnitt
- 29: Abschnitt
- 30: Abschnitt
- 31: Vorsprung
- 32: Oberseite
- 33: Basis
- 34: Steg
- 35: Brückenelement
- 36: Öffnung
- 37: Rippe
- 38: Anlaufschräge
- 39: Aussparung
- 40: Anschlagselement
- 41: Rippe
- 42: Dachaufbau
- 43: Dachdichtungsbahn
- 44: Wärmedämmschicht
- 45: Dampf-/Luftsperrbahn
- 46: Unterkonstruktion
- 47: Befestigungsschraube
- 48: Abdichtungsband

## Patentansprüche

1. Profilsystem zur Fixierung von Abdeckungen, insbesondere Dachdichtungsbahnen (43), umfassend mindestens ein erstes Befestigungsprofil (11), mindestens ein zweites Befestigungsprofil (12), wobei das erste (11) und das zweite (12) Befestigungsprofil jeweils einen Befestigungsflansch (21), einen ersten Endabschnitt (13) und einen zweiten Endabschnitt (14) aufweisen, sowie mindestens einen Verbindungsclip (10) zur rastenden Aufnahme sowohl des ersten Endabschnitts (13) des ersten Befestigungsprofils (11) als auch zur rastenden Aufnahme des zweiten Endabschnitts (14) des zweiten Befestigungsprofils (12) derart, dass das erste (11) und das zweite (12) Befestigungsprofil ein gemeinsames Verbundprofil ausbilden.

2. Profilsystem nach Anspruch 1,
**dadurch gekennzeichnet, dass**
das erste (11) und/oder zweite (12) Befestigungsprofil zumindest abschnittsweise aus Metall, insbesondere aus vorzugsweise schmelztauchveredelten Stahl, gefertigt ist und/oder der Befestigungsclip (10) zumindest abschnittsweise aus Kunststoff, insbesondere als Spritzguss und/oder auf Basis von Polyamid, vorzugsweise PA6, gefertigt ist.

3. Profilsystem nach einem der vorangehenden Ansprüchen,
**dadurch gekennzeichnet, dass**
das erste (11) und/oder zweite (12) Befestigungsprofil als U-Profil ausgebildet ist und zwei Stegbereiche (19, 20) aufweist, wobei die Stegbereiche (19, 20) vorzugsweise zumindest abschnittsweise gefaltet und/oder geknickt sind und/oder zwischen dem Befestigungsflansch (21) und mindestens einem Stegbereich (19, 20) ein nach Außen gerichteter Eckvorsprung ausgebildet ist und/oder wobei mindestens ein Stegbereich (19, 20) zumindest abschnittsweise nach Innen gekrümmt ist und/oder wobei eine Quererstreckung des Befestigungsflansches (21) mindestens 1,5-mal, vorzugsweise mindestens 2,0-mal, weiter vorzugsweise mindestens 2,5-mal so groß ist wie eine Erstreckung der Stegbereiche in einer Richtung, die senkrecht auf eine durch den Befestigungsflansch definierten Ebene steht.

4. Profilsystem nach einem der vorangehenden Ansprüchen,
**dadurch gekennzeichnet, dass**
die Endabschnitte (13, 14) und der Verbindungsclip (10) derart korrespondierend zueinander ausgebildet sind, dass eine Schnappverbindung und/oder Steckverbindung, vorzugsweise eine kombinierte Schnapp-Steck-Verbindung, insbesondere derart, dass der jeweilige Endabschnitt (13, 14) zunächst mit dem Verbindungsclip (10) eine Schnappverbindung eingeht und dann in seine endgültige Montageposition durch Stecken überführt wird, und/oder eine Verbindung ohne weitere Verbindungselemente realisierbar ist.

5. Profilsystem nach einem der vorangehenden Ansprüchen,
**dadurch gekennzeichnet, dass**
das erste (11) und/oder zweite (12) Befestigungsprofil und/oder der Verbindungsclip (10) mindestens eine Aussparung, vorzugsweise eine Vielzahl von Aussparungen (39), aufweist/aufweisen.

6. Profilsystem nach einem der vorangehenden Ansprüchen,
**dadurch gekennzeichnet, dass**
der Verbindungsclip (10) einen U-förmigen Querschnitt aufweist.

7. Profilsystem nach einem der vorangehenden Ansprüchen,
**dadurch gekennzeichnet, dass**
der Verbindungsclip (10) ein Anschlagselement (25, 40) aufweist, an das mindestens eine Stirnkante eines Endabschnittes (13, 14) angelegt werden kann, wobei das Anschlagselement (25, 40) vorzugsweise so ausgebildet und angeordnet ist, dass die Stirnkanten beider Befestigungsprofile (11, 12) an voneinander weg gerichtete Flächen des Anschlagelements angelegt werden können derart, dass das Anschlagselement (25, 40) als Abstandshalter fungiert.

8. Profilsystem nach einem der vorangehenden Ansprüchen,
**dadurch gekennzeichnet, dass**
der Verbindungsclip (10) zumindest im Wesentlichen plattenförmig ausgebildet ist und/oder an Längsrändern Aufnahmen (17, 18) zur Aufnahme zumindest von Abschnitten der Stegbereiche (19, 20) aufweist.

9. Profilsystem nach einem der vorangehenden Ansprüchen,
**dadurch gekennzeichnet, dass**
der Verbindungsclip (10) mindestens einen Ringabschnitt aufweist, in den vorzugsweise mindestens ein Endabschnitt (13, 14) einsteckbar ist.

10. Profilsystem nach einem der vorangehenden Ansprüchen,
**dadurch gekennzeichnet, dass**
der Verbindungsclip (10) zumindest Abschnitte einer Oberseite (32) mindestens eines Befestigungsprofils (11, 12), insbesondere zumindest Abschnitte einer Innenfläche des Befestigungsflansches (21) und/oder zumindest Abschnitte der Stegbereiche (19, 20) überdeckt und/oder zumindest Abschnitte einer Unterseite (23) mindestens eines Befestigungsprofils (11, 12), insbesondere eine Außenfläche des Befestigungsflansches (21) überdeckt.

11. Profilsystem nach einem der vorangehenden Ansprüchen,
**dadurch gekennzeichnet, dass**
die Befestigungsprofile (11, 12) kürzer als 3,5 m, vorzugsweise kürzer als 2,5 m und/oder länger als 1,0 m, vorzugsweise länger als 1,5 m sind.

12. Profilsystem nach einem der vorangehenden Ansprüchen,
**dadurch gekennzeichnet, dass**
ein Endclip zur rastenden Aufnahme des zweiten Endabschnitts des ersten Profilelements (11) vorgesehen ist.

13. Verwendung eines Profilsystems nach einem der vorangehenden Ansprüchen zur Fixierung von Abdeckungen, insbesondere Dachdichtungsbahnen (43).

14. Verwendung eines Verbindungsclips (10) zur rastenden Aufnahme sowohl eines ersten Endabschnitts (13) eines ersten Befestigungsprofils (11) als auch zur rastenden Aufnahme eines zweiten Endabschnitts (14) eines zweiten Befestigungsprofils (12) derart, dass das erste (11) und das zweite (12) Befestigungsprofil ein gemeinsames Verbundprofil zur Fixierung von Abdeckungen, insbesondere Dachdichtungsbahnen (43) ausbilden.

15. Dachabdichtungssystem, umfassend ein Profilsystem nach einem der Ansprüche 1 bis 12 sowie eine Unterkonstruktion (46) und/oder eine Dampf- und/oder Luftsperrbahn (45) und/oder eine Wärmedämmschicht (44) und/oder eine Dachdichtungsbahn (43) und/oder eine, insbesondere abdichtende, Profilüberdeckung (48).

16. Verfahren zur Fixierung von Abdeckungen, insbesondere Dachdichtungsbahnen (43) unter Verwendung eines Profilsystems nach einem der Ansprüche 1 bis 12, wobei mindestens ein Endabschnitt in den Verbindungsclip (10) eingeschnappt und/oder eingesteckt wird, vorzugsweise zunächst eine Schnappverbindung mit anschließender Steckverbindung realisiert wird.
